# EUROPEAN PATENT APPLICATION

(11) **EP 0 884 832 A1**
(43) Date of publication of application: **16.12.1998**
(21) Application number: 97109649.0
(22) Date of filing: 13.06.1997
(51) Int. Cl.: H02N 2/00, H01L 41/09

(54) **Piezomotor with a piezoelectric composite transducer, and method for manufacturing such a transducer**

(71) Applicant: IMRA EUROPE S.A., 06904 Sophia Antipolis Cedex (FR)
(72) Inventor: El Hassani, Chakib, 06270 Villeneuve Loubet (FR); Dufait, Roland, 39700 Evans (FR)
(74) Representative: Kügele, Bernhard

(57) **Abstract**

This invention relates to a piezoelectric motor having a piezoelectric transducer made of a piezoelectric composite element, and more particularly to a piezomotor comprising a stator (13,14,22), a rotor (16) and a piezoelectric transducer (23). The piezoelectric transducer (23) is attached to the stator (13,14,22) and carries surface electrodes which are connected to a control circuit, in order to generate a progressive wave over the surface of the piezoelectric transducer (23). The piezoelectric transducer (23) is made of at least one composite material (20,20') which is formed by a plurality of separate piezoelectric elements (2) embedded into a matrix material (3) having an elastic modulus lower than the one of the piezoelectric elements (2).

This type of piezomotor transducer allows to miniaturize a piezomotor due to simpler handling of the transducer in its entirely rather than of individual miniaturized elements, and also improves the flexibility of the transducer.

## Description

### [Technical field of the invention]

This invention relates to a piezoelectric motor comprising a stator, a rotor and a piezoelectric transducer, said piezoelectric transducer being attached to the stator and holding surface electrodes which are connected to a control circuit, in order to generate a progressive wave over the surface of the piezoelectric transducer. This invention also relates to methods for manufacturing piezoelectric transducers to be used in such a piezoelectric motor.

### [Background art and technical problems related to background art]

Piezomotors are used instead of electromagnetic motors in many applications as electromagnetic motors are big, heavy and noisy, and have complicated structures due to the wiring. Piezomotors use the properties of piezoelectric materials, like ceramics, as an electromechanical transducer. A progressive wave is generated on the surface of the piezoelectric transducer, constituted by the superposition of two standing waves out of phase from each other and generated by two sets of electrodes. The motion of each point of the stator surface is elliptical and drives the rotor.

A first type of piezomotor comprises a ring-shaped piezoelectric element on which a plurality of electrodes are cemented to the surface. The electrodes are connected to a control circuit through a phase shifter. By applying high frequency voltages out of phase from each other, a single-directional surface wave (progressive wave) can be generated on the piezoelectric element which vibrates in flexural mode. An example of such a piezomotor is disclosed in US patent n° 4,562,374 of Sashida et al. This type of piezomotor has limited power, as the amplitudes of the ring-shaped piezoelectric element's vibrations are small and the ring-shaped element may brake at the resonance frequency. When trying to increase the input power, overheating of the area of friction can damage the piezoelectric properties of the element and the bonding between the piezoelectric ring and the stator, and consequently the life time of the motor is reduced.

A second known type of piezomotor solves some of the above mentioned problems, using ceramic pillars instead of ring-shaped ceramics. The stator has a deformable portion which is in contact with a portion of the rotor through a friction area and is controlled by a plurality of independent ceramic pillars. The ceramic pillars are driven in separate sets in order to obtain a progressive wave and each set of ceramic pillars is set off in rotary direction by a quarter of a wavelength from the other and connected to a control circuit which generates a progressive wave to insure the driving of the rotor. Each ceramic pillar can be individually, adjustably and axially pre-stressed against the deformable portion with a screw. The structure of this piezomotor is more complicated and delicate to set, but such a piezomotor has high torque compared to the above described one. In this case the ceramics are vibrating in an axial mode (known as d3-3 mode) which presents a higher electromechanical coupling factor for piezoelectric conversion, and which produces a higher stress limit, compared to the above mentioned flexural mode. An example of this type of piezomotor is disclosed, for instance, in French patent n° 2 715 780, filed on February 1, 1994 in the name of IMRA. The individual piezoelectric elements can also be made of piezoelectric sectors cut in a piezoelectric ring, with individual pre-stress or global pre-stress. As the flatness of the surface of the piezoelectric elements is not optimized, the efficiency of the motor cannot be maximized. In addition, the miniaturization of such an improved piezomotor (smaller than 5 mm) raises some problems as, for instance, the mounting of the miniaturized piezoelements, their accurate positioning on the stator and the setting of their individual pre-stresses. In case of global pre-stress, high precision of the thickness of the piezoelements is required, to assure precise coupling between the piezoelements and the stator in order to avoid variable individual pre-stress. This further increases the cost of a miniaturized piezomotor with individual piezoelement technology.

Therefore, there is an important need to develop a new type of piezoelectric transducer for a piezomotor, which is not subject to the above mentioned problems and which can be miniaturized while keeping a high torque and low manufacturing cost and which is easy to manufacture.

Recently, piezoelectric ceramics/polymer composite structures have been used in some ultrasonic transducers for underwater sonar and medical diagnostics. The articles 〈〈 *Computation of hydrostatic piezoelectric coefficients for 1-3 composites by the finite-element method*〉〉 of B.C. Shin (Sensors and Actuators A, 40 (1994), page 191-194) and 〈〈 *Finite element modeling of active periodic structures : Application to 1-3 piezocomposites*〉〉 of A.C. Hladky-Hennion and J-N. Decarpigny (Journal of Acoustical Society of America 1994 (2), Pt. 1, August 1993) disclose some applications of this type of composite materials in sonar, underwater communications, underwater or medical imaging. Patent EP 0 595 849, of Technomed, discloses a therapeutic medical application. However, the type of composite transducers proposed in these publications are unfit to be used in a piezomotor where they would not produce the desired effects.

### [Summary of the invention (corresponding to the exact content of the claims)]

The main object of the present invention is to propose such an improved piezomotor.

This object is achieved by a piezoelectric motor of the type as described above which is characterized in that said piezoelectric transducer is made of at least one composite material which is formed of a plurality of piezoelectric elements embedded into a matrix material having an elastic modulus lower than the one of the piezoelectric elements.

In one embodiment of the present invention, the piezoelectric elements are parallelepipedical or cylindrical ceramic elements, which are all parallel to the axis of symmetry of a ring-shaped piezoelectric transducer and they are all arranged on the same plane. The matrix material can be a polymer material as resin and/or plastic like material, and the piezoelectric transducer is ring-shaped. In this case, the piezoelectric elements are disposed and sized in such a way that they vibrate in axial direction of the piezomotor.

In addition, the piezoelectric elements have a cross-sectional dimension in the plane of the piezoelectric composite surface in the order of one tenth of the wavelength (or higher) of the progressive wave which is generated by the application of an oscillating polarization voltage.

Preferably, the piezoelectric transducer is made of a plurality of stacked piezoelectric composite rings.

Further, in a preferred embodiment of the present invention, the piezoelectric elements in the composite transducer account for higher than 20% of the total volume of the piezoelectric transducer.

This particular piezoelectric transducer can be globally pre-stressed or locally pre-stressed through a plurality of screws on the stator.

The piezoelectric transducer used in the present invention can be manufactured by a process comprising the steps of :
. cutting a piezoelectric ceramic plate in a plurality of piezoelectric ceramic elements with a regular periodicity,
. filling the space between the piezoelectric ceramic elements with polymer, to get a piezoelectric composite material plate,
. cutting the piezoelectric composite material plate into a ring shape,
. polishing both faces of said piezoelectric composite material ring,
. depositing electrodes on both polished sides of the piezoelectric composite material ring, and
. polarizing the piezoelectric ceramic elements.

Another embodiment of the process for manufacturing a piezoelectric transducer according to the invention, comprises the steps of :
. cutting a piezoelectric ceramic material in a ring shape,
. cutting the piezoelectric ceramic material ring in a plurality of piezoelectric ceramic elements with a regular periodicity,
. filling the space between the piezoelectric ceramic elements with polymer, to get a piezoelectric composite material ring,
. polishing both faces of said piezoelectric composite material ring,
. depositing electrodes on both polished sides of the piezoelectric composite material ring, and
. polarizing the piezoelectric ceramic elements.

Additional objects and features of the invention will appear from the following description in which the preferred embodiments are set forth in detail in connection with the accompanying drawings.

### [Brief description of the figures]

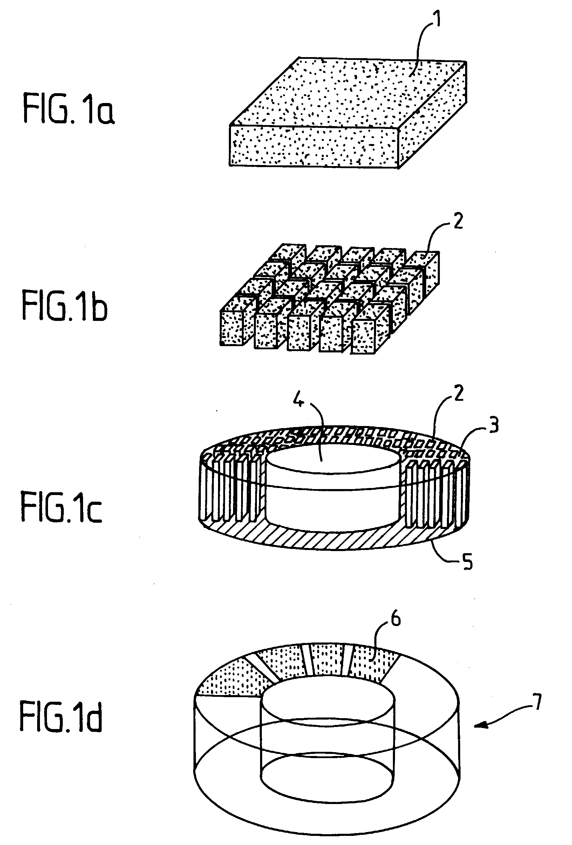

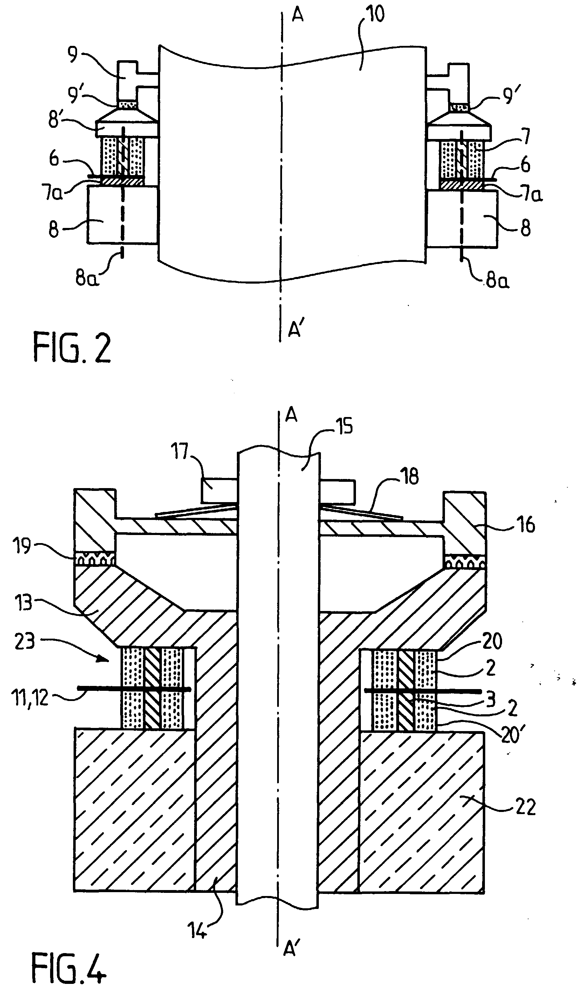

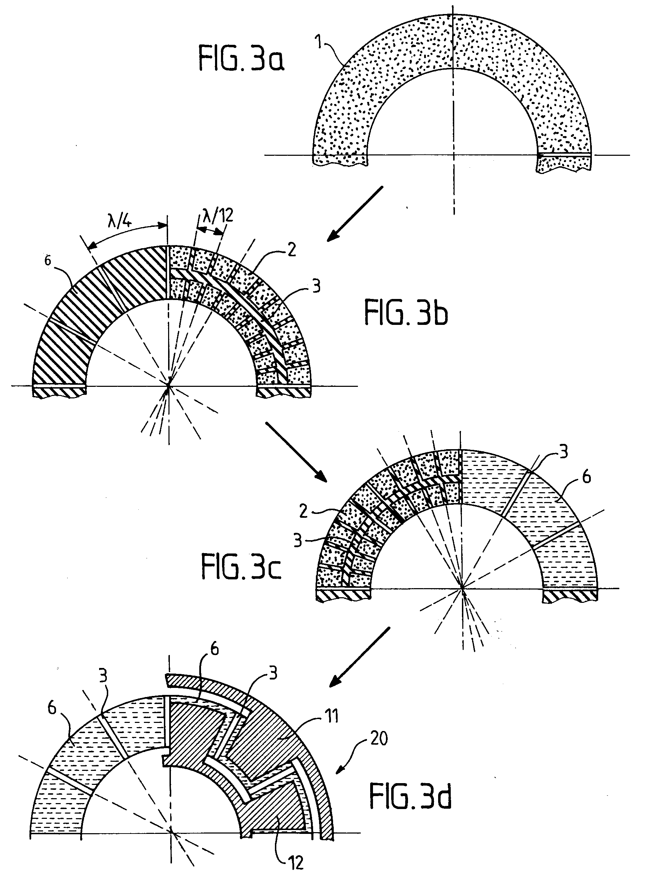

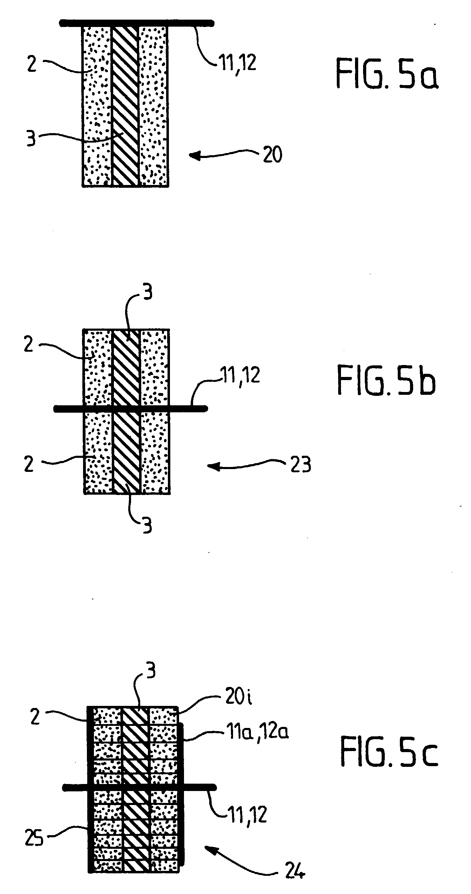

. Figures 1a to 1d are perspective views of the different steps of a general fabrication process of a piezoelectric transducer according to a first embodiment of the present invention,
. Figure 2 is a section view of a piezomotor using a piezoelectric transducer of the type of figure 1d, according to a first embodiment of the present invention,
. Figures 3a to 3d are partial views of the different steps of a fabrication process of a particular piezoelectric composite transducer which can be used in a piezoelectric motor according to the present invention,
. Figure 4 is a section view of a piezomotor according to a second embodiment of the present invention, and
. Figures 5a to 5c are a cross section of three examples of piezoelectric composite transducers which can be used in a piezoelectric composite motor according to the present invention.

The same elements appearing in the different figures, keep the same symbols or reference numbers.

### [Description in detail of the different embodiments of the invention]

In the present application a piezoelectric composite material is defined as being a combination of piezoelectric elements, like, for instance, piezoelectric ceramic elements, with a passive non-piezoelectric polymer having a lower elastic modulus like, for instance, epoxy resins and/or plastic like material. The particular type of piezoelectric composite material that will be described in the preferred embodiment, is known as having a connectivity of 1-3, i.e. a composite consisting of rods of piezoceramic extending from one electrode to the other and embedded in polymer, and working in a compression/extension d3-3 mode. Figures 1a to 1d show the different steps of the general manufacturing process of such a piezoelectric composite ring to be used in a piezomotor, starting from a piezoelectric ceramic plate 1 (Fig. 1a).

The piezoelectric ceramic plate is cut in a plurality of piezoelectric ceramic elements 2 with a regular periodicity (Fig. 1b). In this embodiment, the piezoelectric elements are square pillars, however, the section of the piezoelectric ceramic elements in the horizontal plan may have a rectangular or even a circular shape, or any kind of shape, as for instance, the same shape as the electrode ones. In the two latter cases, however, the manufacturing of the pillars may not comprise the cutting from a ceramic plate, but rather individual forming techniques.

The cross-section of all the piezoelectric ceramic elements is defined in accordance with the specificity of the final piezomotor. Preferably, the dimension of the cross-section of these elements is optimized so as to be in a particular relationship to the wavelength of the generated progressive wave on the surface of the transducer. For instance, the radius or one side of a square-section can be in the order of one tenth of the wavelength. The height of the piezoelectric elements is adjusted in such a manner to keep sufficient width/height ratio (or aspect ratio).

The space between the piezoelectric ceramic elements is then filled with a matrix material 3 such as, for instance, polymer, and in particular, epoxy resins and/or plastic like material. Preferably, the ratio of the volume of the piezoelectric ceramic elements to the volume of the total piezoelectric transducer is higher than 20%.

In the present embodiment, the piezoelectric composite is either cast in a ring mold or formed as a web which may then be cut into ring shape 5 (Fig. 1c) with a center opening 4. The surfaces of the ring 5 can be polished to improve the flatness, in order to optimize the mechanical coupling of the piezoelectric composite ring and stator. It is conceivable, of course, to produce motors with different geometry where the transducers may have non planar shapes, as spherical or cylindrical shapes. For this purpose, the ceramic is cut as illustrated in Fig. 1b, filled and formed to the appropriate shape by the same forming method.

In order to implement the piezoelectric composite transducer 7 in a motor according to the invention, electrodes 6 are then deposited on both sides of the transducer in a known metallization process. With such a process, the shape of the electrodes can be optimized. Then, the piezoelectric elements are polarized with a high voltage, e.g. several thousands Volts.

A first embodiment of a piezomotor according to the present invention will be described now in conjunction with Fig. 2. In Fig. 2, a piezoelectric ring 7 is sandwiched between a rigid part of stator 8 and a deformable part of the stator 8' by means of screws 8a (in dotted vertical lines on the figure) or by any other means of a known assembling method. A rotor 9 which is attached to the driving shaft 10 of the piezomotor is pressed against the upper surface of the deformable part of the stator 8' with known pressing means (not shown), and a friction layer 9' made of polymer type is material is used to insure the contact between the rotor 9 and the stator part 8'. This friction layer is made of suitable mixture of polymers and solid lubricants as for instance Teflon (for polytetrafluorethylene) or PEEK (for polyetheretherketone) type material, in order to set the coefficient of friction. The use of such material in the friction layer decrease the wear of interface between rotor and stator. An insulating ring 7a located between the surface electrode 6 and the stator 8 permits also to connect the surface electrode 6 to an electronic circuit (not shown) through conductor film deposited on the face in contact with the surface electrodes 6. The ring 7a could be typically printed circuit type ring.

For instance, the electronic control device supplies a first set and a second set of electrodes 6 with a sinus-type voltage and a cosinus-type voltage, respectively. The two sinusoidal voltages have the same frequency and are π/2 out of phase from each other, and the the electrodes are λ/4 spaced (λ being the wavelength of the deformation wave), in order to generate a progressive wave over the surface of the piezoelectric composite ring 7. The sinusoidal voltages create the axial vibrations along axis AA' of each piezoelectric element 2 of the composite material, with the appropriate phase to generate two standing waves, the progressive wave resulting from the superposition of these two standing waves. The surface points of the stator perform an elliptical motion which generates the torque that creates a relative rotation between the stator 8 and the rotor 9. The piezoelectric composite ring 7 can be pre-pressed against the stator 8 by using screws 8a.

The piezomotor according to the present invention combines the main advantages of the two cited prior art types of piezomotors, i.e. the high axial amplitudes of the piezoelectric elements 2 that work in contraction and extension parallel to the axis of symmetry of the motor, and the elasticity of the matrix polymer 3. Because of the good flexibility of the piezoelectric transducer, the piezomotor can be driven at the resonant frequency of the piezoelectric transducer without any risk of breaking the transducer.

A second embodiment of a piezomotor according to the present invention will be described now in conjunction with Fig. 3a to 3c and Fig. 4.

Fig. 3a shows a ring-shaped piezoelectric material plate 1. Fig. 3b is a half view of a piezoelectric composite ring 5 used in the piezomotor of the second embodiment. The right side shows a quarter of the piezoelectric composite material formed of piezoelectric elements 2 obtained by cutting the plate 1 of Fig. 3a. In Fig.3b, they have a λ/12 section area and are embedded within a polymer matrix 3, however, they may have, for instance, any section area in the range of λ/4 to λ/20. In this embodiment, the piezoelectric composite ring 5 is divided into twelve sectors for receiving twelve surface electrodes 6 which have a λ/4 area, as it is shown in Fig. 3b and 3c. Each surface electrode is separate from the adjacent electrodes by an insulating space 3 which corresponds to a matrix polymer area on the piezoelectric composite ring 5.

In this particular embodiment, there are two sets of surface electrodes 6 whereby the electrodes of one set are connected in parallel to the same voltage supply. Along the periphery of the transducer the electrodes of one set are arranged alternatively with the electrodes of the other set. Each of the 2x6 electrodes is connected to one of e.g. six piezoelectric elements, the number of piezoelements can obviously be different from six. In the same way, the number of surface electrodes is not limited to twelve.

In accordance with the type of electric control applied to the piezoelectric composite transducer 20 of Fig. 3d, the first set and the second set of electrodes have to be connected to a phase-shift circuit (not shown) through first external and second internal conductive plates 11 and 12, respectively. These conductive plates can be copper plates and extend over the surface electrodes like two circular interleaving combs.

Fig. 4 shows a piezoelectric motor according to the invention using a piezoelectric transducer 23 centered on the axis of symmetry AA' of the motor. The stator comprises a deformable portion 13 and a rigid portion 14 & 22 mounted in a rotating way on the driving shaft 15. The driving shaft 15 is attached to the rotor 16 which is pre-pressed against the deformable portion 13, advantageously through a friction layer of the type above described, by a nut 17 and a spring 18. The narrow upper surface of the periphery of the deformable portion 13 is in contact with the rotor 16 through friction layer 19. The upper surface of the flexible portion 13 which is in contact with the rotor 16 can be designed in a plurality of teeth (not shown) in order to maximize the speed of the rotor.

The piezoelectric transducer 23 of this preferred embodiment is made of two stacked piezoelectric composite rings 20 and 20' having their external and internal conductive plates 11 and 12 in common. This stack can consist in more than two stacked piezoelectric composite rings as shown in Fig. 5c. A stack of rings has the advantage to reduce the required input voltage. The piezoelectric transducer 23 is globally pre-pressed against the underside of the flexible portion 13 of the stator by a base 22 which is screwed or mounted with a pressing nut (not shown) on the rigid portion 14 of the stator. In a different embodiment, the pre-pressing of the piezoelectric transducer 23 can obviously be made by different individual screws through the base 22. In the latter case, the piezoelectric transducer is pre-pressed through an intermediate plate ring, or directly against the underside surface of the piezoelectric composite ring 23 or against recesses previously made in the piezoelectric composite ring 23. The flexible portion 13 of the stator and the base 22 being in electrical contact with each other, constitute the ground.

The flexible portion 13 of the stator is exited by the axial vibrations of the piezoelectric elements 2 created by the suitable voltages applied to the electrodes 6 via the external and internal conductive plates 11 and 12. The rotor 16 is driven by the generated elliptical motion of each point of the friction area at the periphery of the flexible portion 13. The torque transmission between stator and rotor is optimized due to this particular double-stacked piezoelectric composite ring structure of the piezoelectric transducer, the shape of the deformable portion which extend from the friction zone to the rigid portion, and the lever-arm effect between the rigid portion and the periphery of the flexible portion of the stator.

Fig. 5a shows a section view of a first example of a piezoelectric composite transducer 20 (or 7) made of a matrix polymer 3 and piezoelectric elements 2 connected on one side to surface electrodes 11 and 12. Fig 5b shows a second example of a piezoelectric composite transducer 23 made of a stack of two piezoelectric composite rings, both connected on one side to an outside phase-shift circuit through surface electrodes 11 and 12, as used in the piezomotor of Fig. 4.

Fig. 5c shows a third example of a piezoelectric composite transducer 24 made of a stack of a plurality of piezoelectric composite rings 20i of the type shown in Fig. 3d. Each ring 20i shares first surface electrodes on one side with an adjacent ring, connected to electrode 11 or 12 through a vertical electrode portion 11a or 12a, and second surface electrodes on the other side with an adjacent ring, connected to the vertical ground electrode portion 25. That is, ground electrode 25 and polarization electrodes 11 and 12 are alternatively connected to the horizontal electrodes of the multilayer piezoelectric composite transducer shown in Fig. 5c.

These three examples of piezoelectric composite transducers may be used in both piezoelectric motors of first and second embodiments of figures 2 and 4, respectively.

### [Exploitation in industry]

The present invention is not limited to the above described embodiments, but can be adjusted to and implemented in all types of piezomotors, with one or two driving rotors which are attached to each other (known as 〈〈 butterfly 〉〉 structures). The piezoelectric transducer can be comprised of a plurality of portions cut from a piezoelectric composite structure, such as e.g. sectors which are assembled in a piezoelectric composite ring as described above.

The piezomotor according to the invention is light, compact and quiet. It can be instantaneously stopped and started (in about 1 ms), and can be miniaturized. It can be manufactured without any manipulation of small elements and allows simple electrode positioning. The manufacturing method is easy to implement, and piezomotors can be mass-produced inexpensively. Global pre-stress can be applied accurately, and the final mounting of the piezomotor according to the present invention is simplified. Consequently, the manufacturing cost is reduced.

The present invention is particularly well adapted to small-sized motors, and, for instance, for driving headrests in cars, focus adjustment or zoom in photo-cameras, for watches, or in any type of apparatus which requires a small, light, silent and strong motor.

## Claims

1. A piezoelectric motor comprising a stator (8;13,14,22), a rotor (9;16) and a piezoelectric transducer (7;20;23;24), said piezoelectric transducer (7;20;23;24) being attached to the stator (8;13,14,22) and holding surface electrodes (6) which are connected to a control circuit, in order to generate a progressive wave over the surface of the piezoelectric transducer (7;20;23;24), characterized in that said piezoelectric transducer (7;20;23;24) is made of at least one composite material which is formed of a plurality of separate piezoelectric elements (2) embedded into a matrix material (3) having an elastic modulus lower than the one of the piezoelectric elements (2).

2. A piezoelectric motor according to claim 1, characterized in that the piezoelectric elements (2) are ceramic elements.

3. A piezoelectric motor according to claim 1 or 2, characterized in that the matrix material (3) is a polymer material.

4. A piezoelectric motor according to claim 3, characterized in that the polymer material is epoxy resins and/or plastic like material.

5. A piezoelectric motor according to one of the preceding claims, characterized in that the piezoelectric transducer (23;24) is made of a plurality of piezoelectric composite rings (20i).

6. A piezoelectric motor according to one of the preceding claims, characterized in that the piezoelectric elements (2) vibrate in the axial direction (AA') of the piezomotor.

7. A piezoelectric motor according to one of the preceding claims, characterized in that the piezoelectric elements (2) have a cross-sectional dimension in the plane of the piezoelectric composite surface in the order of one tenth of the wavelength (λ) of the produced progressive wave.

8. A piezoelectric motor according to one of the preceding claims, characterized in that the total volume of the piezoelectric elements (2) forms at least 20% of the volume of the composite piezoelectric transducer (7;20;23;24).

9. A piezoelectric motor according to one of the preceding claims, characterized in that the piezoelectric transducer (7;20;23;24) is globally pre-pressed between the stator (8;13,14) and the rotor (9;16).

10. A piezoelectric motor according to one of claims 1 to 8, characterized in that the piezoelectric transducer is pre-pressed with a plurality of screws.

11. A piezoelectric motor according to claim 6, characterized in that the piezoelectric elements (2) are parallelepipedical or cylindrical elements which are all parallel to the axis of symmetry (AA') of the ring-shaped piezoelectric transducer (7;20;20i).

12. A method for manufacturing a piezoelectric transducer (7;20;23;24) to be used in a piezoelectric motor, comprising the steps of :
. cutting a piezoelectric ceramic plate (1) in a plurality of piezoelectric ceramic elements (2) with a regular periodicity,
. filling the space between the piezoelectric ceramic elements with polymer (3), to get a piezoelectric composite material plate,
. cutting the piezoelectric composite material plate into a ring shape (5),
. polishing both faces of said piezoelectric composite material ring,
. depositing electrodes (6) on both polished sides of the piezoelectric composite material ring (5), and
. polarizing the piezoelectric ceramic elements (2).

13. A method for manufacturing a piezoelectric transducer (7;20;23;24) to be used in a piezoelectric motor, comprising the steps of :
. cutting a piezoelectric ceramic material in a ring shape,
. cutting the piezoelectric ceramic material ring in a plurality of piezoelectric ceramic elements (2) with a regular periodicity,
. filling the space between the piezoelectric ceramic elements with polymer (3), to get a piezoelectric composite material ring (5),
. polishing both faces of said piezoelectric composite material ring (5),
. depositing electrodes (6) on both polished sides of the piezoelectric composite material ring (5), and
. polarizing the piezoelectric ceramic elements (2).
